# EUROPEAN PATENT APPLICATION

(11) **EP 2 804 367 A1**
(43) Date of publication of application: **19.11.2014**
(21) Application number: 13305621.8
(22) Date of filing: 16.05.2013
(51) Int. Cl.: H04M 3/56

(54) **A method, a server and a client for conference call audio processing**

(71) Applicant: ALCATEL LUCENT, 92100 Boulogne-Billancourt (FR)
(72) Inventor: Sorokin, Roman, 92707 Colombes (FR)
(74) Representative: Kröhnert, Michael

(57) **Abstract**

The invention concerns a method of processing an audio stream, comprising sending (303) a first audio stream to a first device, wherein a second audio stream is mixed (303) with the first audio stream if a first condition depending on information about the relative position of the first device and a second device is met.

The invention concerns a server and a device for processing an audio stream as well.

## Description

### Field of the invention

The invention relates to a method, a server and a client for audio processing in a telecommunications network.

### Background

In an implementation capable of audio processing in particular for conference calls, participants or an administrator mute individual audio streams manually to improve audio quality.

However, manual interaction is required.

### Summary

The object of the invention is to provide an improved audio processing in particular for conference calls.

The main idea of the invention is to process an audio stream in a method comprising sending a first audio stream to a first device, wherein a second audio stream is mixed with the first audio stream if a first condition depending on information about the relative position of the first device and a second device is met. This provides automatic processing without human interaction.

Advantageously information about devices is monitored, and the information about the relative position of devices is determined depending on the information about the devices.

Advantageously a list of devices is generated, the information about the relative position is determined upon detection of a change in the list of devices. Automatic processing is more efficient this way.

Advantageously the information about the relative position is a distance between the devices. Monitoring the relative position provides automatic reaction depending on the distance of individual devices.

Advantageously the first audio stream is recorded by the second device and the second audio stream is recorded by a third device, and wherein the first audio stream and the second audio stream are mixed only if the distance between the first device and the third device is larger than a predetermined threshold. Automatically the second audio stream is considered or not depending on the distance. This allows automatic muting by not mixing the second audio stream with the first audio stream when the distance less than desired.

Advantageously the position is a geographic position. Using the geographic position is an easy way to determine the distance.

The invention concerns also a server for processing an audio stream, comprising a sender operable to send a first audio stream to a first device, and a processor adapted to mix a second audio stream with the first audio stream if a first condition depending on information about the relative position of the first device and a second device is met.

The invention concerns also a device for processing an audio stream, comprising a transceiver adapted to send and receive audio streams and establish connections and conferencing sessions and a wireless local area tag.

Further developments of the invention can be gathered from dependent claims and the following description.

### Brief description of the figures

In the following the invention will be explained further making reference to the attached drawings.
Fig. 1 schematically shows a part of a telecommunication network.
Fig. 2 schematically shows a server.
Fig. 3 schematically shows a flow chart.
Fig. 4 schematically shows a device.

### Description of the embodiments

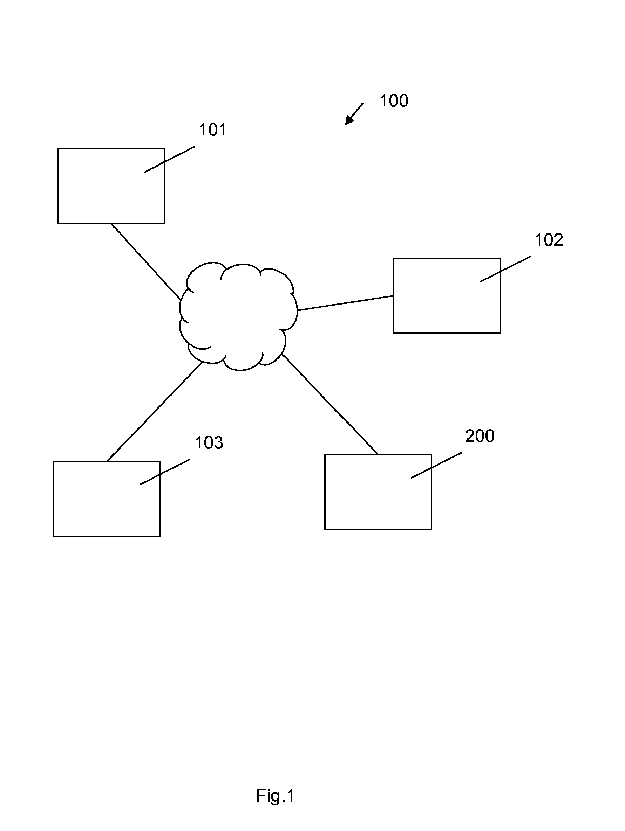

Figure 1 shows a first part of a telecommunication network 100.

The telecommunication network 100 comprises a server 200, a first device 101, a second device 102 and a third device 103. The telecommunication network 100 may comprise more devices as well.

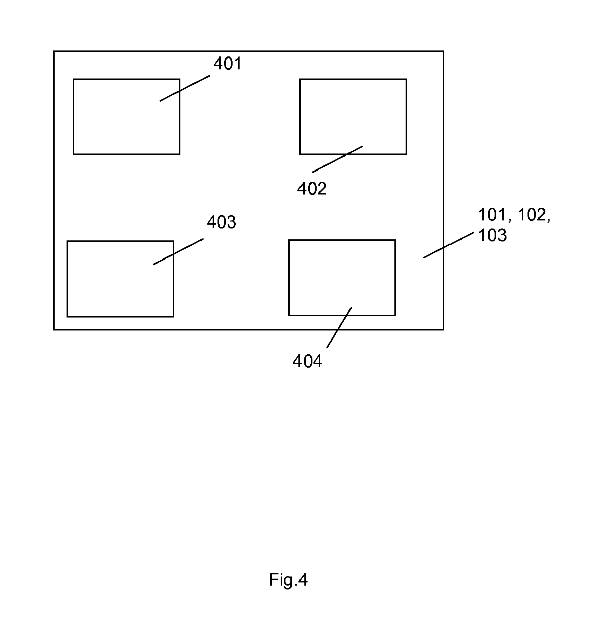

While the devices may vary in terms of hardware, each of the devices is equipped as depicted exemplary in figure 4 with a capturing device 401, e.g. a microphone or a microphone jack, for capturing audio and an output 402, e.g. a loudspeaker or headset socket. The audio preferably is de- or encoded as an audio stream, e.g. according to the ITU-T H.323 Voice over IP protocol. Any other type of de- or encoding may be used, like Network Voice Protocol according to RFC 741.

To that end the devices comprise an compatible de- and encoder 403 adapted on the one hand to decode received audio streams and provide them via the output 402, and on the other hand to encode audio captured by the capturing device 401 and provide it to the transceiver 404.

The transceiver 404 is adapted to send and receive such audio streams and establish connections and conferencing sessions with other devices or the server 200.

While the server 200 is preferably used, each of the devices may comprise the components of the server 200 as described below. In this way the idea is applied to a peer to peer conferencing session as well.

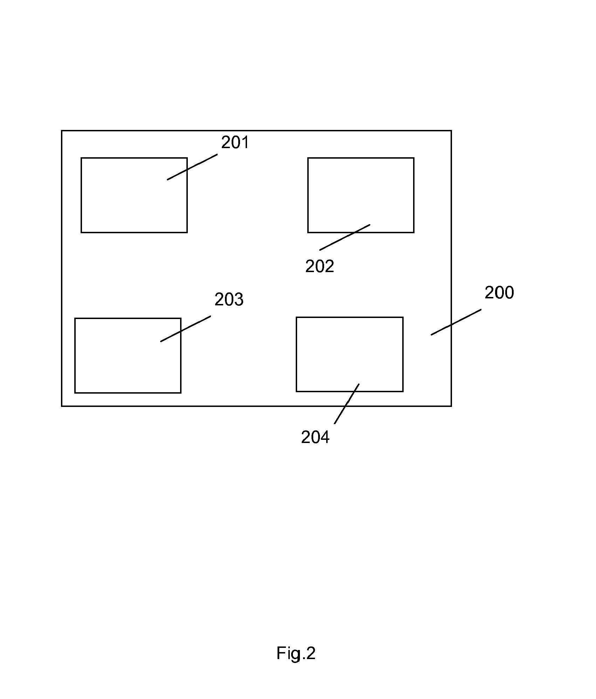

The server 200 is depicted in figure 2. The server 200 is adapted in one example as Conferencing Bridge. In this example the server 200 is adapted to process audio streams received from multiple devices, mix them and provide the mixed audio streams to multiple devices participating in a conference call. The server 200 may in this case be adapted to process authentication as well.

The devices 101, 102, 103 and the server 200 are connected for example via local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signalling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI).

The connection can but must not be directly between the devices and the server.

The server 200 comprises a sender 201 operable to send a first audio stream to the first device 101. The first audio stream is in the example send while the first device 101 is connected to the server 200 in a conference call.

The server 200 comprises a receiver 204 adapted to receive a second audio stream, e.g. from the third device 103. The second audio stream is in the example received from the third device 103 while the third device 103 is connected to the server 200 in the conference call.

The server 200 comprises a processor 202 adapted to mix the second audio stream with the first audio stream if a first condition depending on information about the relative position of the first device 101 and the device sending the second audio stream is met. In the example the third device 103 is sending the second audio stream.

The first condition is for example that the relative distance between the device sending the second audio stream and the device the first audio stream is to be sent to is larger than a predetermined threshold.

In an example where the first audio stream is to be sent to the first device 101 and the second audio stream is sent by the third device 103, the server 200 is adapted to mix the first audio stream and the second audio stream only if the distance between the first device 101 and the third device 103 is larger than the predetermined threshold.

The predetermined threshold is for example 0.5 meter. This way the audio stream recorded by the third device 103 is not mixed to the audio stream sent to the first device 101, when the devices are so close that the users can hear each other directly without using the devices. This automatically removes an echo in the audio first stream sent to the first device 101 of the audio spoken by the user of the third device 103 that would be caused by latency and processing time when mixing the second audio stream and the first audio stream.

The server 200 comprises a receiver 203 operable to monitor information about devices in the telecommunication network 100, e.g. the first device 101, the second device 102 or the third device 103. The information monitored by the receiver 203 is for example the absolute position of the devices.

The receiver 203 is for example adapted to request the absolute position of the devices upon receipt of a request from the respective device to connect to the server 200.

In an example the information about the absolute position is the geographic position of the devices 101, 102, 103. This position is for example indicated using the well known geographic coordinate system. Any other system may be used. For example a local Cartesian coordinate system having it's origin in a wireless local area network router and it's x/y plane parallel to the office floor may be used. Likewise global positioning system coordinates may be used.

In one example the devices 101, 102, 103 are adapted to send the information about their absolute position upon receipt of such request.

In another example wireless triangulation is used to determine the absolute position of the devices 101, 102, 103.

In a preferred example the devices 101, 102, 103 comprise wireless local area tags not depicted in figure 4.

In the example of wireless triangulation the absolute position of a device 101, 102, 103 may be determined from predetermined absolute positions of several wireless local area network routers. Such routers are for example installed in an office near the respective devices 101, 102, 103. The routers are for example adapted to read the wireless local area tag and determine the position of the device 101, 102, 103 relative to the respective wireless local area router. Furthermore in this case the routers are adapted to send their own absolute position and the relative position of the device 101, 102, 103 to the receiver 203. Alternatively the receiver 203 is adapted to receive only the relative information. In that case the predetermined absolute position of the routers may be stored in a data base.

The processor 201 furthermore is operable to determine information about the relative position of devices 101, 102, 103 to each other in the telecommunication network depending on the information about the devices 101, 102, 103 monitored by the receiver 203.

To that end the processor 201 is adapted to determine the absolute position of the devices 101, 102, 103. The absolute position is in the respective coordinate system either determined from the relative position and absolute positions received by the receiver 203, or the received relative position and the stored predetermined absolute position of the routers in question.

Instead or additionally to wireless triangulation global positioning system information may be used outdoors e.g. for mobile phones or a data base lookup in a database containing devices and predetermined distances between devices may be used.

The processor 201 is adapted to calculate the relative distance between the devices from their absolute position. In case the information is stored in the data base, a lookup of the information is performed and the relative distance is determined from the received relative position and the result of the lookup.

The processor 201 is furthermore operable to generate a list of devices. The list is for example a list of identifiers of the devices 101, 102, 103 that have requested connection to the server 200. In an example, the first device 101 has the identifier 101, the second device 102 has the identifier 102 and the third device 103 has the identifier 103.

The processor 201 is operable to determine the information about the relative position upon detection of a change in the list of devices. To that end the processor 201 is adapted to exchange information with the receiver 203 indicating the request of devices to connect or disconnect from the server 200.

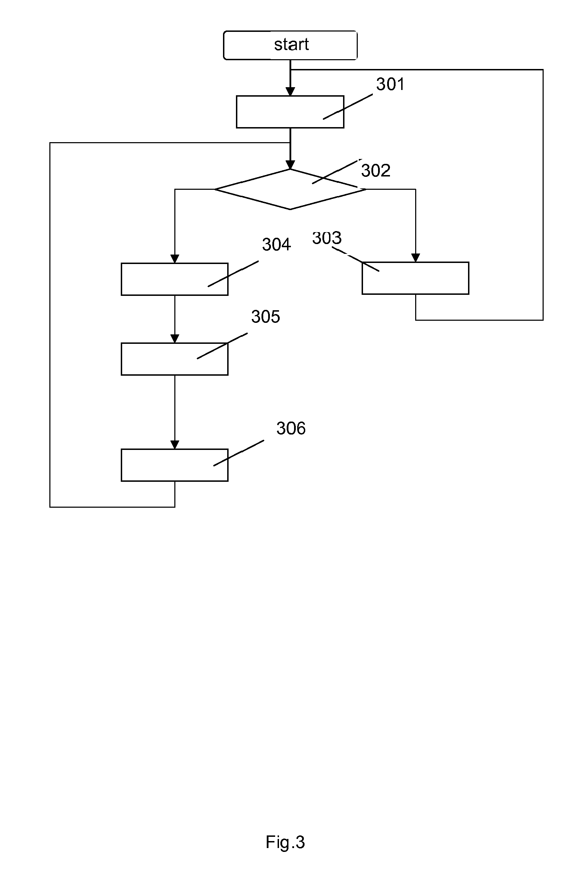

A method of audio processing is explained below making reference to figure 3.

The conference is started for example whenever it is detected that the conference administrator entered the designated key on the keyboard of his device. In the example, the first device 101, the second device 102 and the third device 103 comprise such keyboard and are already connected to the server 200, waiting to be placed into conference. This means that the server 200 acts as a conference bridge. The administrator is for example using the first device 101.

After the start a step 301 is executed.

In step 301, the list of devices is generated for example depending on the devices already waiting. In the example, the list comprises identifiers of the first device 101, the second device 102 and the third device 103. Furthermore in step 301 devices joining or leaving the conference are detected, e.g. by monitoring input received from the respective devices. In any case upon detection of a change in the list of devices a step 302 is executed.

In step 302 a test is performed to determine if the relative position of all participants has been checked already. For example a first matrix of participating devices is used to indicate for example with an x that the distance between a pair of devices has been checked. Not checked pairs contain for example an empty entry.

The columns and lines are for example indicated by the device identification. In the exemplary first matrix, the first device 101 has the identifier 101, the second device 102 has the identifier 102 and the third device 103 has the identifier 103. This nomenclature for the device identifiers will be used for the other matrices as well.

For example in case only the distance between the first device 101 and the second device 102 has been checked, the first matrix is:

| | | | |
|---|---|---|---|
| | 101 | 102 | 103 |
| 101 | | x | |
| 102 | | | |
| 103 | | | |

If all pairs of devices have been checked, step 303 is executed. Otherwise step 304 is executed.

In step 304 a pair of devices is selected. For example from the first matrix, a pair of devices indicated as not checked is selected. In above example, the devices 101 and 103 are for example selected. Afterwards a step 305 is executed.

In step 305 the information about the relative position of the selected devices is determined depending on the information about these devices.

In an example the information about the relative position is the geographic distance between the devices. The distance of the first device 101 and the third device 103 is for example determined as absolute position, e.g. using the well known geographic coordinate system. Any other system may be used. For example a local Cartesian coordinate system having it's origin in a wireless local area network router and it's x/y plane parallel to the office floor may be used. Likewise global positioning system coordinates may be used.

For example wireless triangulation is used to determine the absolute position of the devices. In the example of wireless local area tags for example the absolute position of a device may be determined from predetermined absolute positions of the wireless local area network routers reading the wireless local area tag and the position of the device relative to the respective wireless local area router. Likewise global positioning system information may be used outdoors e.g. for mobile phones or a data base lookup in a database containing devices and predetermined distances between devices may be used. In the latter case a matrix similar to abovementioned matrix may be populated with all devices, e.g. of a company and in indication of the distance between the devices in the offices of the company. Alternatively all devices connected to the same switch of a computer network may be considered to have a similar absolute position.

From the absolute position the distance between the devices is calculated. In case the information is stored in the matrix, a lookup of the information is performed and the distance is determined from the result of the lookup. Instead of determining the exact distance, a predetermined value indicating proximity or distance may be used, e.g. to differentiate devices being within a certain area or connected depending to the same switch from other devices.

Afterwards a step 306 is executed.

In step 306 the parameters for mixing the individual audio streams are determined.

The parameters indicate whether to mix the audio stream recorded by one device with the audio stream that will be sent to another device.

For example a second matrix is used to store a variable that can have values "true" or "false", indicating to mix or not mix respectively.

To that end the variable is set "true" in case the relative distance between the devices is larger than the predetermined distance and "false" otherwise.

Considering the example of the first device 101 being close to the third device 103 this means for example:

| | | | |
|---|---|---|---|
| | 101 | 102 | 103 |
| 101 | | true | false |
| 102 | true | | true |
| 103 | false | true | |

Assuming the first audio stream is recorded by the second device 102 and the second audio stream is recorded by the third device 103 this means that the first audio stream and the second audio stream are mixed if the matrix indicates "true" in the line 101, column 103 and not mixed if the matrix indicates "false" there. This means that the first audio stream is mixed with the second audio stream in case the distance between the first device 101 and the third device 103 is larger than the predetermined threshold.

Likewise this means that the first audio stream is not mixed with the second audio stream in case the distance between the first device 101 and the third device 103 is closer than or equal to the predetermined threshold.

The predetermined threshold is for example indicative of a distance of 0.5 meter. The threshold may be a predetermined variable indicating the distance in meters or any number suitable to compare to the relative distance determined.

Afterwards step 302 is executed.

In step 303 the conference is started by initiating the audio session with the parameters for mixing the individual audio streams.

To that end the second audio stream is mixed with the first audio stream if the first condition depending on information about the relative position of the first device 101 and the device sending the second audio stream is met. In the example the third device 103 is sending the second audio stream.

The condition is for example whether the respective entry in the second matrix is "true" or "false".

In the example, this means that the first audio stream is sent to the first device 101 that doesn't contain the second audio stream originating from the third device 103 while it is too close, e.g. less or equal than 0.5 meter, to the first device 101.

Then the first audio stream is sent to the first device 101.

The first audio stream is sent this way e.g. in a parallel process until the step 303 is repeated at a later time. Optionally the first audio stream is modified or stopped upon detection that the first device 101 is disconnected from the conference bridge or the conference ends.

Afterwards step 301 is executed.

The method ends, for example when the list of devices is empty again or a trigger is received indicating that the conference call has ended.

The steps may be executed in any other order and not all of the steps have to be performed all times. The steps may be repeated during the conference even when no change to the devices listed is detected. In particular additionally or instead of monitoring the list, the position of the devices may be monitored as well to determine changes to the position of devices and update the second matrix frequently or upon change of position.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method of processing an audio stream, comprising sending (303) a first audio stream to a first device (101), wherein a second audio stream is mixed (303) with the first audio stream if a first condition depending on information about the relative position of the first device (101) and a second device (102, 103) is met.

2. The method according to claim 1, wherein information about devices (101, 102, 103) is monitored (305), and the information about the relative position of devices (101, 102, 103) is determined (305) depending on the information about the devices (101, 102, 103).

3. The method according to claim 1 or 2, comprising generating (301) a list of devices (101, 102, 103), and determining (305) the information about the relative position upon detection (302) of a change in the list of devices (101, 102, 103).

4. The method according to any of the aforementioned claims, wherein the information about the relative position is a distance between the devices (101, 102, 103).

5. The method according to any of the aforementioned claims, wherein the first audio stream is recorded by the second device (102) and the second audio stream is recorded by a third device (103), and wherein the first audio stream and the second audio stream are mixed only if the distance between the first device (101) and the third device (103) is larger than a predetermined threshold.

6. The method according to any of the aforementioned claims, wherein the position is a geographic position.

7. A server (200) for processing an audio stream, comprising a sender (201) operable to send a first audio stream to a first device (101), and a processor (202) adapted to mix a second audio stream with the first audio stream if a first condition depending on information about the relative position of the first device (101) and a second device (102, 103) is met.

8. The server (200) according to claim 7, comprising a receiver (203) operable to monitor information about devices (101, 102, 103), and wherein the processor (201) is operable to determine the information about the relative position of devices (101, 102, 103) depending on the information about the devices (101, 102, 103).

9. The server (200) according to claim 7 or 8, wherein the processor (202) is operable to generate a list of devices (101, 102, 103).

10. The server (200) according to any of claims 7 to 9,
wherein the processor (202) is operable to determine the information about the relative position upon detection of a change in the list of devices (101, 102, 103).

11. The server (200) according to any of claims 7 to 10, wherein the information about the relative position is a distance between the devices (101, 102, 103).

12. The server (200) according to any of claims 7 to 11, wherein the first audio stream is recorded by the second device (102) and the second audio stream is recorded by a third device (103), and wherein the first audio stream and the second audio stream are mixed only if the distance between the first device (101) and the third device (103) is larger than a predetermined threshold.

13. The server (200) according to any of claims 7 to 12, wherein the position is a geographic position.

14. A device (101, 102, 103) for processing an audio stream, comprising a transceiver (404) adapted to send and receive audio streams and establish connections and conferencing sessions and a wireless local area tag.

15. A computer program for processing an audio stream, wherein said computer program, when executed on a computer, causes the computer to perform the method of claim 1.
